# EUROPÄISCHE PATENTANMELDUNG

(11) **EP 1 898 011 A2**
(43) Veröffentlichungstag der Anmeldung: **12.03.2008**
(21) Anmeldenummer: 07017278.8
(22) Anmeldetag: 04.09.2007
(51) Int. Cl.: E03F 1/00, E03F 5/10

(54) **Anordnung zur Versickerung von Oberflächenwasser**

(30) Priorität: 06.09.2006 DE 202006013764 U
(71) Anmelder: REHAU AG + Co, 95111 Rehau (DE)
(72) Erfinder: Baumann, Warnfried, 91315 Höchstadt (DE)

(57) **Zusammenfassung**

Die Anordnung zur Versickerung von Oberflächenwasser mit wenigstens einer Reinigungsvorrichtung (1), mit wenigstens einer Versickerungsvorrichtung (2) und mit wenigstens einer Retensionsvorrichtung (3) gemäß vorliegender Erfindung zeichnet sich dadurch aus, dass die Retensionsvorrichtung (3) flüssigkeitsdicht ausgebildet, sowie von der wenigstens einen, vor der Versickerungsvorrichtung (2) angeordneten und mit dieser verbundenen Reinigungsvorrichtung (1), beabstandet angeordnet und flüssigkeitsdicht verbunden ist.

## Beschreibung

Die Erfindung betrifft eine Anordnung zur Versickerung von Oberflächenwasser mit wenigstens einer Reinigungsvorrichtung, mit wenigstens einer Versickerungsvorrichtung und mit wenigstens einer Retensionsvorrichtung.

Derartige Anordnungen zur Versickerung von Oberflächenwasser sind im bekannten Stand der Technik bereits beschrieben.
Oberflächenwasser wird in zunehmendem Maße über dezentrale Versickerungsvorrichtungen in den Boden abgegeben. Hierbei spielt die Verunreinigung dieses Oberflächenwassers eine wichtige Rolle und ist bei der Planung bzw. Genehmigung derartiger Vorrichtungen entsprechend zu berücksichtigen, wie dies ausführlich im Merkblatt DWAM 153 dokumentiert ist.
Bekannt ist eine Vorreinigung des anfallenden Oberflächenwassers mittels bepflanzter Bodenmulden, durch Kies- bzw. Sandfilter, durch sog. Sedimentationsbecken bzw. auch über Reinigungsgranulate. Diese verschiedenen bekannten Methoden der Reinigung von Oberflächenwasser sind einer entsprechenden Versickerungsvorrichtung entsprechend vorzuschalten.

Weiterhin bekannt ist die Möglichkeit, die Versickerungsvorrichtung zum Zweck einer Vorreinigung mit einem sog. Reinigungsgranulat zu umgeben, welches das Oberflächenwasser bei seinem Durchtritt reinigen soll, bevor es danach in den jeweiligen Boden versickert. Diese recht kostenintensive Nutzung derartiger Reinigungsgranulate sind somit der Versickerungsvorrichtung nachgeschaltet und weisen außerdem den Nachteil auf, dass sie nach dem Einbau beispielsweise im Erdreich nicht mehr wechselbar bzw. reinigbar sind.

Ein weiterer Nachteil der bekannten Anordnungen zur Versickerung von Oberflächenwasser besteht darin, dass die anfallende Menge an Oberflächenwasser starken Schwankungen unterliegt, beispielsweise beginnend von einem leichten Nieselregen bis zu einem extremen Platzregen.

Problematisch beim bekannten Stand der Technik ist die Dimensionierung derartiger Vorrichtungen für die unterschiedliche Stärke der anfallenden Oberflächenwassermenge.
Eine Dimensionierung nach dem größtmöglichen Anfall an Oberflächenwasser führt neben den erheblich höheren Kosten auch dazu, dass eine derartige Versickerungsvorrichtung im Alttagsbetrieb hoffnungslos überdimensioniert ist.
Ein weiterer Nachteil des bekannten Standes der Technik liegt darin, dass eine Dimensionierung derartiger Vorrichtungen auf eine vorher definierte Menge an Oberflächenwasser dazu führt, dass bei Spitzenbelastungen von großen Mengen an Oberflächenwasser unbehandeltes und somit ungereinigtes Oberflächenwasser in die Versickerungsvorrichtung und somit auch in den Boden gelangen kann.
Bei Einsatz einer definierten Menge an Reinigungsgranulat, welches um die Versickerungsvorrichtung angeordnet ist, wird zwar das anfallende Oberflächenwasser behandelt, wobei die Dimensionierung derartiger Versickerungsvorrichtungen mit den gleichen Problemen behaftet ist wie bereits beschrieben, es ist jedoch weiterhin sehr nachteilig, dass ein Austausch des verbrauchten und mit Schadstoffen angereicherten Reinigungsgranulates nicht möglich ist, ohne die Versickerungsvorrichtung zu zerstören.
Somit kann es zur Bildung von Altlasten im Boden aus der Versickerungsvorrichtung heraus bzw. auch durch das Reinigungsgranulat selbst kommen, welche sich ebenfalls sehr nachteilig auf das Grundwasser auswirken.

Hier setzt die Erfindung ein, die sich die Aufgabe gestellt hat, die Nachteile des bekannten Standes der Technik zu überwinden, und eine Anordnung zur Versickerung von Oberflächenwasser anzugeben, die kostengünstig und wirtschaftlich herstellbar ist und die die anfallende Menge an Oberflächenwasser optimal reinigt und versickern lässt.

Erfindungsgemäß wird dies durch die kennzeichnenden Merkmale des Anspruches 1 gelöst. Weitere vorteilhafte Ausgestaltungen sind in den Unteransprüchen beschrieben.

Die erfindungsgemäße Anordnung zur Versickerung von Oberflächenwasser ist dadurch gekennzeichnet, dass die Retensionsvorrichtung flüssigkeitsdicht ausgebildet, sowie von der wenigstens einen, vor der Versickerungsvorrichtung angeordneten und mit dieser verbundenen Reinigungsvorrichtung, beabstandet angeordnet und flüssigkeitsdicht verbunden ist. Somit ist es erstmals möglich, jegliche Menge an anfallendem Oberflächenwasser in einer der Reinigungsvorrichtung vorgeschalteten Retensionsvorrichtung zu sammeln, diese Oberflächenwasser über wenigstens oder mehrere Reinigungsvorrichtungen vorzureinigen und das Oberflächenwasser nachfolgend in an sich bekannten Versickerungsvorrichtungen versickern zu lassen.
Vorteilhaft bei der erfindungsgemäßen Anordnung zur Versickerung von Oberflächenwasser wird gesehen, dass das gesamte anfallende Oberflächenwasser, egal in welcher Mengen es anliegt, entsprechend behandelt werden kann, da ablaufseitig nur der Versickerungsstrom anfällt, der aber wesentlich kleiner ist als der Spitzenzufluss des beispielsweise platzregenartigen Regenereignisses.
Die Vorreinigung kann somit kostengünstig und optimal auf relativ kleine Durchsatzleistungen ausgelegt werden, so dass diese zentral an der Retensionsvorrichtung angeordnet sein können und somit die vorteilhafte Möglichkeit bieten, in der Reinigungsvorrichtung eingebrachte Reinigungselemente auszutauschen und durch neue und unverbrauchte Reinigungselemente zu ersetzen.

Durch die erfindungsgemäße getrennte Anordnung der Speicherung des anfallenden Oberflächenwassers von der eigentlichen Versickerung ist es somit erstmals möglich, das Volumen der Versickerungsvorrichtung entsprechend klein zu dimensionieren, so dass diese beispielsweise in eng bebauten Innenstädten problemlos verbaubar ist.
Für die erfindungsgemäße Anordnung zur Versickerung von Oberflächenwasser ist somit nur eine hohe Oberfläche der Versickerungsvorrichtung notwendig, um eine ausreichende Verteilung des gereinigten Oberflächenwassers zu erreichen. Die bisher nicht mögliche wirtschaftliche Dimensionierung von Speichervolumen der Retensionsvorrichtung und der notwendigen Fläche bzw. Oberfläche der Versickerungsvorrichtung ist bei der erfindungsgemäßen Anordnung zur Versickerung von Oberflächenwasser erstmals getrennt möglich. Ein weiterer Vorteil der erfindungsgemäßen Anordnung zur Versickerung von Oberflächenwasser wird darin gesehen, dass bereits in der Retensionsvorrichtung eine gewisse Vorreinigung über beispielsweise Absetzvorgänge stattfindet, so dass nur noch ein Teilstrom der möglichen Verunreinigungen in der nachgeschalteten Reinigungsvorrichtung behandelt werden muss.
Die Retensionsvorrichtung ist in einer weiteren vorteilhaften Ausführungsform so ausgebildet, dass sie flüssigkeitsdicht sowie von der wenigstens einen, vor der Versickerungsvorrichtung angeordneten und mit dieser verbundenen, Reinigungsvorrichtung über ein Flächenelement beabstandet angeordnet ist. In dieser Ausführungsform lässt sich die erfindungsgemäße Anordnung zur Versickerung von Oberflächenwasser sehr kompakt dimensionieren und in einer vorteilhaften, platzsparenden Anordnung in einer eng dimensionierten Baugrube einbringen.

Das Flächenelement der erfindungsgemäßen Anordnung zur Versickerung von Oberflächenwasser kann dabei als flüssigkeitsdichte Folie, Platte, Vlies, Teerbahn und dergl. ausgebildet sein. Durch ein derart flüssigkeitsdichtes Flächenelement ist es auch jederzeit möglich, dass die Retensionsvorrichtung reinigbar ist, ohne dass über Absetzvorgänge dort vorliegende Verunreinigungen in den Boden abgegeben werden.

Bei der erfindungsgemäßen Anordnung zur Versickerung von Oberflächenwasser ist die Retensionsvorrichtung als Rigole, Becken, Behälter und dergl. ausgebildet. Insbesondere bei Einsatz einer Rigole, die sowohl als Kiesrigole als auch aus einzelnen, thermoplastisch herstellbaren Blockelementen herstellbar ist, ist eine wirtschaftliche Herstellung sowie ein kostengünstiger Einbau einer derartigen erfindungsgemäßen Anordnung zur Versickerung von Oberflächenwasser möglich.

Weiterhin vorteilhaft wird gesehen, dass bei der erfindungsgemäßen Anordnung zur Versickerung von Oberflächenwasser das Verhältnis des Speichervolumens der Retensionsvorrichtung zum Speichervolumen der Versickerungsvorrichtung wenigstens zwei beträgt. Somit kann neben einer getrennten Dimensionierung der Retensionsvorrichtung von der Versickerungsvorrichtung eine kompakte platzsparende Anordnung, beispielsweise in eng bebauten Innenstadtbereichen, ermöglich werden.

Ebenso vorteilhaft wird gesehen, dass die wasserbenetzte Oberfläche der Retensionsvorrichtung etwa so groß wie die wasserbenetzte Oberfläche der Versickerungsvorrichtung ist. Dies hat den Vorteil, dass die Dimensionierung der Versickerungsvorrichtungen mit der derzeit verfügbaren Software realisierbar ist.

Ein weiterer Vorteil der erfindungsgemäßen Anordnung zur Versickerung von Oberflächenwasser wird darin gesehen, dass die Retensionsvorrichtung flüssigkeitsdicht mit wenigstens einer Reinigungsvorrichtung verbunden ist. Somit kann je nach Einbauart und Einbauort das Volumen der Retensionsvorrichtung der anfallenden Menge an Oberflächenwasser angepasst sein, wobei danach die entsprechende Anzahl an Reinigungsvorrichtungen dimensionierbar bzw. anbringbar ist.
Weiterhin vorteilhaft wird gesehen, dass die Reinigungsvorrichtung ein entnehmbares Reinigungselement aufweist, welches beispielsweise als chemisches Reinigungselement entsprechende Verunreinigungen adsorbiert bzw. absorbiert. Ebenso vorteilhaft ist der Einsatz von mechanischen Reinigungselementen wie beispielsweise durch an sich bekannte Siebe, zentrifugale Wirbel bzw. Sedimentationen. Es liegt jedoch auch im Rahmen der Erfindung, dass die Reinigungsvorrichtung ein biologisches Reinigungselement enthält, welches beispielsweise an bestimmten Trägersubstanzen angeordnete Bakterien sind.

Es hat sich als sehr vorteilhaft erwiesen, dass die Versickerungsvorrichtung über ein Flächenelement beabstandet direkt an der Retensionsvorrichtung angeordnet ist. Somit lässt sich die erfindungsgemäße Anordnung zur Versickerung von Oberflächenwasser in nur einer eng dimensionierten Baugrube installieren, wobei die Versickerungsvorrichtung beispielsweise als Rigole mit Blockelementen in der Baugrube entsprechend angeordnet ist, wobei auf die am Boden bzw. an den Seitenwänden der Baugrube angeordneten Blockelemente ein flüssigkeitsdichtes Flächenelement, beispielsweise als Folie ausgebildet, eingebracht ist, und in den flüssigkeitsdichten Raum die Retensionsvorrichtung einbringbar ist, die beispielsweise als einfaches, über eine Abdeckung verschlossenes Becken ausgebildet sein kann.

In einer weiteren vorteilhaften Ausgestaltungsform ist die Versickerungsvorrichtung an wenigstens einer Seitenfläche der Retensionsvorrichtung angeordnet, wobei dies abhängig ist von der Dimensionierung der anfallenden Menge Oberflächenwasser sowie der baulichen Gegebenheiten.

Es hat sich weiterhin als sehr vorteilhaft erwiesen, dass die Ablaufleistung der Retensionsvorrichtung etwa der Reinigungsleistung der Reinigungsvorrichtung entspricht. Es liegt jedoch auch im Rahmen der Erfindung, dass die Ablaufleistung der Retensionsvorrichtung wesentlich größer ist als die Reinigungsleistung einer Reinigungsvorrichtung, so dass an dieser Stelle mehrere Reinigungsvorrichtungen einzusetzen sind.

Ein weiterer Vorteil der erfindungsgemäßen Anordnung zur Versickerung von Oberflächenwasser wird darin gesehen, dass die Abflussleistung der Retensionsvorrichtung der Versickerungsleistung der Versickerungsvorrichtung entspricht. Es liegt jedoch auch im Rahmen der Erfindung, dass bei bestimmten, beispielsweise baulichen Gegebenheiten mehrere Versickerungsvorrichtungen an eine Retensionsvorrichtung anschließbar sind.

Die Erfindung soll nun an diesen nicht einschränkenden Ausführungsbeispielen näher beschrieben werden.

Es zeigen:
- Fig. 1: Erfindungsgemäße Anordnung zur Versickerung von Oberflächenwasser
- Fig. 2: Weitere erfindungsgemäße Anordnung zur Versickerung von Oberflächenwasser

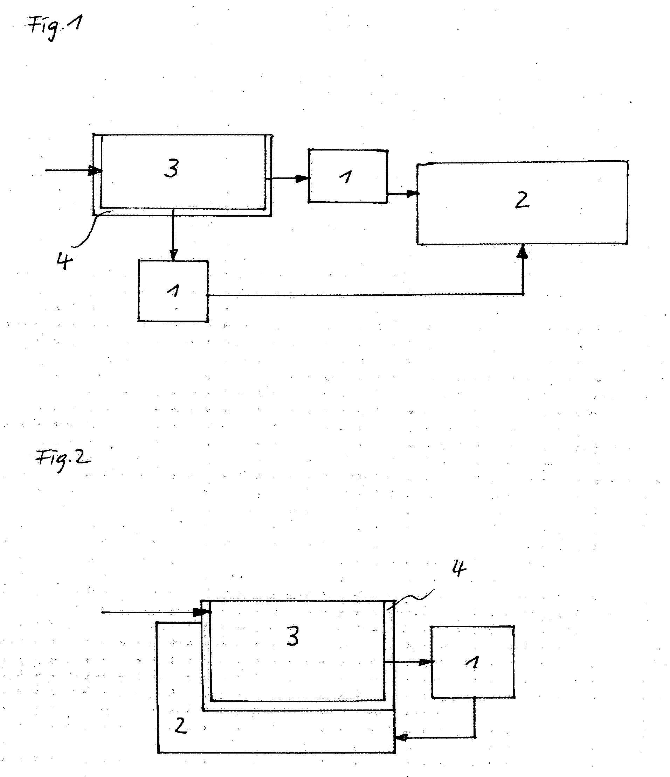

In Fig. 1 ist eine erfindungsgemäße Anordnung zur Versickerung von Oberflächenwasser in einem Blockschaubild dargestellt. Die Retensionsvorrichtung 3 ist an ihren Außenseiten durch ein Flächenelement 4 flüssigkeitsdicht ausgebildet. Das anfallende Oberflächenwasser wird über an sich bekannte Rohre der Retensionsvorrichtung 3 zugeführt und in dieser zwischengespeichert. An der Retensionsvorrichtung 3 sind in diesem Ausführungsbeispiel zwei Reinigungsvorrichtungen 1 angeordnet, welche beispielsweise an sich bekannte Reinigungsschächte sein können. Von den Reinigungsvorrichtungen 1 wird das behandelte Oberflächenwasser nun einer Versickerungsvorrichtung 2 zugeführt, welche in an sich bekannter Weise als beispielsweise Kiesrigole ausgebildet sein kann. Mit dieser erfindungsgemäßen Anordnung zur Versickerung von Oberflächenwasser kann das gesamte anfallende Oberflächenwasser, egal in welchen Mengen oder Zeiträumen dies anfällt, in der Retensionsvorrichtung 3 zwischengespeichert und dann über die optimal und kostengünstig dimensionierten Reinigungsvorrichtungen 1 einer Versickerungsvorrichtung 2 zugeführt werden. Durch die getrennte Anordnung der Versickerungsvorrichtung 2 von der Retensionsvorrichtung 3 kann das Volumen bzw. die Oberfläche der Versickerungsvorrichtung 2 optimal dimensioniert werden.
Ein weiterer Vorteil der erfindungsgemäßen Anordnung zur Versickerung von Oberflächenwasser wird darin gesehen, dass auch bei bereits verbauten Versickerungsvorrichtungen 2 eine entsprechende, mit Reinigungsvorrichtungen 1 kombinierte Retensionsvorrichtung 3 nachträglich einbringbar ist.

In Fig. 2 ist eine weitere erfindungsgemäße Anordnung zur Versickerung von Oberflächenwasser in einem Blockschaltbild dargestellt. Dabei ist die Retensionsvorrichtung 3 beispielsweise als aus Blockelementen bestehende Rigole ausgebildet, welche an ihren Außenseiten über das Flächenelement 4 flüssigkeitsdicht ausgebildet ist. Das Flächenelement 4 ist in diesem Ausführungsbeispiel als flüssigkeitsdichte Platte ausgebildet, welche an den Außenseiten der Blockelemente so angeordnet ist, dass die Retensionsvorrichtung 3 in sich flüssigkeitsdicht ausgebildet ist.

Unterhalb der durch das Flächenelement 4 abgedichteten Retensionsvorrichtung 3 ist eine Versickerungsvorrichtung 2 angeordnet, die direkt über das Flächenelement 4 beabstandet an der Retensionsvorrichtung 3 angeordnet ist. Die Versickerungsvorrichtung 2 ist sowohl unterhalb als auch an den Seitenflächen der Retensionsvorrichtung 3 angeordnet. Von der Retensionsvorrichtung 3 beabstandet ist eine Reinigungsvorrichtung 1 angeordnet, welche das aus der Retensionsvorrichtung 3 ankommende Oberflächenwasser entsprechend chemisch bzw. mechanisch behandelt.
Aus der Reinigungsvorrichtung 1 wird das behandelte Oberflächenwasser über an sich bekannte Rohre in die Versickerungsvorrichtung 2 eingeleitet, von der aus das gereinigte Oberflächenwasser im Untergrund versickern kann. Die erfindungsgemäße Anordnung zur Versickerung von Oberflächenwasser ist in dieser Ausführungsform sehr kompakt und platzsparend ausgebildet, so dass diese beispielsweise in eng bebauten Innenstädten problemlos und kostengünstig einsetzbar ist.
Mit dieser erfindungsgemäßen Anordnung zur Versickerung von Oberflächenwasser ist stets eine kontrollierte Abführung anfallenden Oberflächenwassers zur Reinigung und nach der Reinigung zur entsprechenden Versickerung möglich. Durch die unterschiedliche Dimensionierung der Retensionsvorrichtung 3 unabhängig und getrennt von der Versickerungsvorrichtung 2 ist eine kostengünstige Herstellung der erfindungsgemäßen Anordnung zur Versickerung von Oberflächenwasser und ein schneller und kostengünstiger Einbau realisierbar.

## Patentansprüche

1. Anordnung zur Versickerung von Oberflächenwasser mit wenigstens einer Reinigungsvorrichtung (1) mit wenigstens einer Versickerungsvorrichtung (2) und mit wenigstens einer Retensionsvorrichtung (3), **dadurch gekennzeichnet, dass** die Retensionsvorrichtung (3) flüssigkeitsdicht ausgebildet, sowie von der wenigstens einen, vor der Versickerungsvorrichtung (2) angeordneten und mit dieser verbundenen Reinigungsvorrichtung (1), beabstandet angeordnet und flüssigkeitsdicht verbunden ist.

2. Anordnung nach Anspruch 1, **dadurch gekennzeichnet, dass** die Retensionsvorrichtung (3) flüssigkeitsdicht ausgebildet, sowie von der wenigstens einen, vor der Versickerungsvorrichtung (2) angeordneten und mit dieser verbundenen, Reinigungsvorrichtung (1) über ein Flächenelement (4) beabstandet angeordnet ist.

3. Anordnung nach einem der vorhergehenden Ansprüche, **dadurch gekennzeichnet, dass** das Flächenelement (4) als flüssigkeitsdichte Folie, Platte, Vlies, Teerbahn und dergl. ausgebildet ist.

4. Anordnung nach einem der vorhergehenden Ansprüche, **dadurch gekennzeichnet, dass** die Retensionsvorrichtung (3) als Rigole, Behälter, Becken und dergl. ausgebildet ist.

5. Anordnung nach einem der vorhergehenden Ansprüche, **dadurch gekennzeichnet, dass** das Verhältnis des Speichervolumens der Retensionsvorrichtung (3) zum Speichervolumen der Versickerungsvorrichtung (2) wenigstens zwei beträgt.

6. Anordnung nach einem der vorhergehenden Ansprüche, **dadurch gekennzeichnet, dass** die wasserbenetzte Oberfläche der Retensionsvorrichtung (3) etwa so groß ist wie die wasserbenetzte Oberfläche der Versickerungsvorrichtung (2).

7. Anordnung nach einem der vorhergehenden Ansprüche, **dadurch gekennzeichnet, dass** die Retensionsvorrichtung (3) flüssigkeitsdicht mit wenigstens einer Reinigungsvorrichtung (1) verbunden ist.

8. Anordnung nach einem der vorhergehenden Ansprüche, **dadurch gekennzeichnet, dass** die Reinigungsvorrichtung ein entnehmbares Reinigungselement aufweist.

9. Anordnung nach Anspruch 8, **dadurch gekennzeichnet, dass** das Reinigungselement ein chemisches und/oder mechanisches und/oder biologisches Reinigungselement ist.

10. Anordnung nach einem der vorhergehenden Ansprüche, **dadurch gekennzeichnet, dass** die Versickerungsvorrichtung (2) über das Flächenelement (4) beabstandet an der Retensionsvorrichtung (3) angeordnet ist.

11. Anordnung nach einem der vorhergehenden Ansprüche, **dadurch gekennzeichnet, dass** die Versickerungsvorrichtung (2) unterhalb der Retensionsvorrichtung (3) angeordnet ist.

12. Anordnung nach einem der vorhergehenden Ansprüche, **dadurch gekennzeichnet, dass** die Versickerungsvorrichtung an wenigstens einer Seitenfläche der Retensionsvorrichtung (3) angeordnet ist.

13. Anordnung nach einem der vorhergehenden Ansprüche, **dadurch gekennzeichnet, dass** die Ablaufleistung der Retensionsvorrichtung der Reinigungsleistung der Reinigungsvorrichtung (1) entspricht.

14. Anordnung nach einem der vorhergehenden Ansprüche, **dadurch gekennzeichnet, dass** die Abflussleistung der Retensionsvorrichtung (3) in etwa der Versickerungsleistung der Versickerungsvorrichtung (2) entspricht.
